# EUROPEAN PATENT SPECIFICATION

(11) **EP 2 843 120 B1**
(45) Date of publication and mention of the grant of the patent: **09.08.2017**
(21) Application number: 14183332.7
(22) Date of filing: 03.09.2014
(51) Int. Cl.: D06F 58/20, D06F 58/28, D06F 25/00, D06F 58/10, D06F 33/02, D06F 39/08, D06F 58/02

(54) **Laundry treatment apparatus**
Wäschebehandlungsvorrichtung
Appareil de traitement du linge

(30) Priority: 03.09.2013 KR 20130105541; 03.09.2013 KR 20130105543; 03.09.2013 KR 20130105720; 03.09.2013 KR 20130105542
(43) Date of publication of application: 04.03.2015
(73) Proprietor: LG Electronics Inc., Seoul 150-721 (KR)
(72) Inventor: Yoo, Shanghee, Seoul, 153-802 (KR); Lee, Sungmin, Seoul, 153-802 (KR); Gwon, Kusung, Seoul, 153-802 (KR); Choi, Yeongkyeong, Seoul, 153-802 (KR); Lee, Gilnam, Seoul, 153-802 (KR); Kim, Kwanghyun, Seoul, 153-802 (KR); Ryu, Bonggon, Seoul, 153-802 (KR)
(74) Representative: Hibbert, Juliet Jane Grace

(56) References cited:
- EP-A1- 2 116 647
- EP-A1- 2 843 119
- US-A1- 2013 219 734

## Description

This application claims the benefit of Korean Patent Application No. 10-2013-0105541, filed on September 3, 2013, Korean Patent Application No. 10-2013-0105543, filed on September 3, 2013, Korean Patent Application No. 10-2013-0105720, filed on September 3, 2013 and Korean Patent Application No. 10-2013-0105542, filed on September 3, 2013.

### BACKGROUND OF THE INVENTION

### Field of the Invention

The present disclosure relates to laundry treatment apparatuses.

### Discussion of the Related Art

Laundry treatment apparatuses are electronic apparatuses that may implement washing and/or drying of a washing object (laundry). Examples of the laundry treatment apparatuses include a washing machine, a drying machine and a combined washing and drying machine.

Laundry treatment apparatuses that may function to dry laundry may be classified into laundry treatment apparatuses having an exhaust drying system and laundry treatment apparatuses having a circulation drying system according to how to treat heated air (hot air) supplied to laundry after heat exchange between the air and the laundry.

A circulation drying system is a system that condenses air discharged from a receiving space in which laundry is stored and thereafter heats the condensed air (i.e. heating after dehumidification) to resupply the air to the receiving space. An exhaust drying system is a system that continuously supplies hot air into the receiving space and discharges air subjected to heat exchange from the laundry treatment apparatus.

In the case of laundry treatment apparatuses having a circulation drying system, provision of a cooling water supply structure may be essential because it is necessary to dehumidify air discharged from the receiving space using cooling water prior to resupplying the air to the receiving space. Therefore, these laundry treatment apparatuses having a circulation drying system may cause consumption of an excessive quantity of cooling water when cooling efficiency is low.

On the other hand, laundry treatment apparatuses having an exhaust drying system may cause excessive energy consumption because they discharge air exchanged heat with laundry despite the fact that the air has a higher temperature than that of outside air.

EP2116647 discloses a method for drying laundry in a ventilation laundry dryer or washing/drying machine, wherein the laundry is dried in a drum where it is subjected to the action of an air flown that causes the water contained therein to evaporate, wherein a drying cycle comprises at least one closed circuit step, during which an air flow consisting of a single air mass makes several passages through the drum, at least one open circuit step, during which the air flow comprises an air mass taken in from the outer environment and then exhausted into the outer environment after having flowed through the drum once, and wherein the air is heated during the closed circuit step.

US2013/0219734 relates to a laundry treating machine, including an air supply unit for supplying air a tub for having the air supplied thereto from the air supply unit to treat the laundry, the tub having an air recovery opening formed in an outside circumferential surface thereof for recovery of the air to the air supply unit, a lint filter mounted to an inside of the air recovery opening for filtering the lint from the air, a filter cleaning unit for spraying cleaning water to separate the lint from the lint filter, and a flow passage member for guiding the cleaning water dropping from the lint filter to an inside of the tub to an inside surface of the tub.

### SUMMARY OF THE INVENTION

Accordingly, the present disclosure is directed to a laundry treatment apparatus that substantially obviates one or more problems due to limitations and disadvantages of the related art.

The present disclosure provides a laundry treatment apparatus having an advanced concept drying system which may reduce consumption of energy and cooling water required to dry laundry, and a control method thereof.

The present disclosure provides a laundry treatment apparatus having a drying system which may achieve enhanced drying efficiency, and a control method thereof.

The present disclosure provides a laundry treatment apparatus having a cooling water supply structure which may prevent cooling water from reaching laundry to be dried, and a control method thereof.

Additional advantages, objects, and features will be set forth in part in the description which follows and in part will become apparent to those having ordinary skill in the art upon examination of the following or may be learned from practice of the invention. Objectives and other advantages may be realized and attained by the structure particularly pointed out in the written description and claims hereof as well as the appended drawings.

To achieve these objects and other advantages, there is provided a laundry treatment apparatus according to claim 1.

The laundry treatment apparatus may further include a controller configured to control opening/closing of the water supply unit, and the controller may control the water supply unit to supply water into the tub during operation of the fan and the heater.

The controller may rotate the drum at first Revolutions Per Minute (RPM) and second RPM during operation of the fan and the heater, the first RPM may be set to RPM at which the centrifugal force of laundry caused by rotation of the drum becomes greater than the weight of the laundry, and the second RPM may be set to be greater than the first RPM.

The controller may control the water supply unit to supply water into the tub while the drum is rotated at the second RPM.

The water supply unit supplies water into the tub through the circumference of the tub at a position spaced apart from a vertical line passing a rotation center of the drum by a predetermined distance in a width direction of the tub.

The suction duct and the exhaust duct remain in an open state during operation of the heater and the fan.

The suction duct may be located in a flow path through which interior air of the tub is directed to the fan such that outside air of the tub is introduced into the circulation duct through the suction duct.

The cross sectional area of the exhaust duct may be less than the cross sectional area of the circulation duct.

The quantity of air discharged through the exhaust duct and the quantity of air introduced through the suction duct may be set to be equal to each other.

The quantity of air discharged through the exhaust duct may be set to be greater than the quantity of air introduced through the suction duct.

The laundry treatment apparatus may further include a drain unit configured to discharge water stored in the tub from the tub, and the exhaust duct may be connected to the drain unit.

A junction of the exhaust duct and the drain unit may be located higher than the set maximum water level of the tub.

The laundry treatment apparatus may further include a switchover valve configured to open or close the exhaust duct.

The laundry treatment apparatus may further include a flow path valve configured to prevent air introduced into the drain unit through the exhaust duct from being supplied into the tub.

There is also provided a laundry treatment apparatus includes a drum in which laundry is stored, a heater configured to heat air, a first heat exchange flow path including a tub configured to provide a space in which the drum is received and a space in which air is condensed and a duct through which some of interior air of the tub is directed to the heater and then resupplied to the tub, a second heat exchange flow path including a duct through which outside air of the tub is guided into the tub by way of the heater and a duct through which some of interior air of the tub is discharged from the tub, and a water supply unit configured to supply water into the tub so as to cool the tub.

The laundry treatment apparatus may further include a controller configured to control opening/closing of the water supply unit and RPM of the drum, and the controller may supply water into the tub while the drum is rotated at predetermined reference RPM or more.

The laundry treatment apparatus may further include a water supply guide configured to introduce water supplied from the water supply unit into the tub, and the water supply guide may be positioned to allow water introduced into the tub to move to the bottom of the tub along an inner circumferential surface of the tub.

The water supply guide may be located at the circumference of the tub at a position spaced apart from a vertical line passing a rotation center of the drum by a predetermined distance in a width direction of the tub.

The water supply guide may be located between a vertical line as a tangent in relation to the circumference of the drum and a vertical line as a tangent in relation to the circumference of the tub.

The tub may further include a water supply communication portion (fourth communication portion) perforated in the circumference of the tub to communicate with the water supply unit, and the water supply guide may include a trap body accommodated in the water supply communication portion to provide a space in which water is stored, an outer circumferential surface of the trap body being spaced apart from an inner circumferential surface of the water supply communication portion by a predetermined distance, and a guide pipe fixed to the water supply communication portion to guide water into the trap body, the guide pipe defining a flow path for communication between a space between the outer circumferential surface of the trap body and the inner circumferential surface of the water supply communication portion and the interior of the trap body.

The bottom of the trap body may be spaced apart from an outlet of the guide pipe by a predetermined distance, and the space between the outer circumferential surface of the trap body and the inner circumferential surface of the water supply communication portion may have an open plane for communication between the interior of the trap body and the interior of the tub.

The open plane may take the form of a semicircle or arc located farther from a vertical line passing a rotation center of the drum on the basis of a line passing a center of the water supply communication portion to extend parallel to the longitudinal direction of the tub.

The suction duct may include a suction port through which outside air is introduced, the suction port being fixed to the circulation duct, and a discharge port through which the air introduced through the suction port is supplied into the tub, the discharge port being fixed to the tub.

The circulation duct may be fixed to the top of an outer circumferential surface of the tub.

The laundry treatment apparatus may further include a duct communication portion (first communication portion) configured to discharge interior air of the tub into the circulation duct, and the discharge port may be located in the duct communication portion.

The circulation duct may further include a fixing portion to which the suction port is connected.

The circulation duct may further include a first filter provided at the fixing portion to filter air to be introduced into the suction port.

The laundry treatment apparatus may further include a second filter located in the duct communication portion (first communication portion) to filter air to be directed from the tub to the circulation duct.

The laundry treatment apparatus may further include a filter washer configured to supply wash water to the second filter so as to wash the second filter.

The suction duct may include a coupling section located below the circulation duct to communicate with the tub, the coupling section being provided with the discharge port, and an extension section extending from the coupling section to the circulation duct, the extension section being provided with the suction port.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIGs. 1 and 2 show a laundry treatment apparatus according to the present invention;
FIG. 3 shows a suction duct included in the laundry treatment apparatus according to the present invention;
FIG. 4 shows a flow path switchover unit included in the laundry treatment apparatus according to the present invention;
FIG. 5 shows a water supply unit and a water supply guide included in the laundry treatment apparatus according to the present invention;
FIG. 6 shows another embodiment of the laundry treatment apparatus according to the present invention;
FIG. 7 shows a control process of the laundry treatment apparatus according to the present invention; and
FIGs. 8 and 9 respectively show first motion and second motion.

### DETAILED DESCRIPTION OF THE INVENTION

Hereinafter, exemplarily embodiments of the present invention will be described in detail with reference to the accompanying drawings. Meanwhile, a configuration of an apparatus that will be described hereinafter and a control method of the apparatus are provided for explanation of the exemplarily embodiments of the present invention and are not intended to limit the technical scope of the present invention. The same reference numerals of the entire specification designate the same constituent elements.

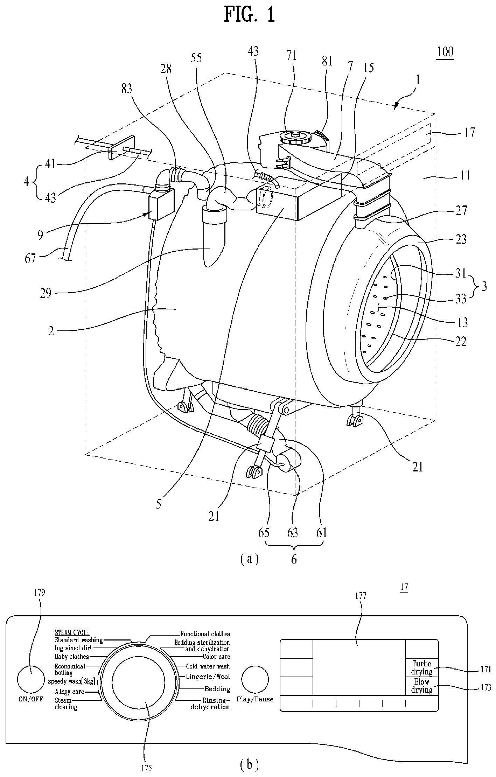

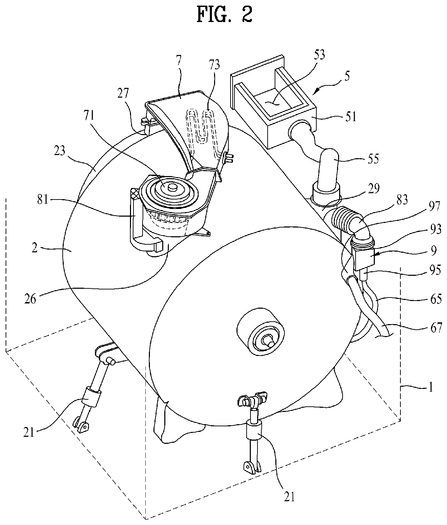

As exemplarily shown in FIGs. 1 and 2, a laundry treatment apparatus of the present invention, designated by reference numeral 100, includes a cabinet 1 defining an external appearance of the apparatus 100, laundry receptacles 2 and 3 placed within the cabinet 1 and configured to store a washing object (laundry) and wash water therein, a circulation duct 7 through which interior air of the laundry receptacles 2 and 3 is circulated, an exhaust duct 83 through which some of the interior air of the laundry receptacles 2 and 3 is discharged from the laundry receptacles 2 and 3, a suction duct 81 through which outside air is supplied into the laundry receptacles 2 and 3 and a heating unit configured to supply heated air into the laundry receptacles 2 and 3.

The cabinet 1 includes a front panel 11 defining a front surface of the laundry treatment apparatus 100. The front panel 11 is provided with an opening 13 through which laundry is introduced into or removed from the laundry receptacles 2 and 3.

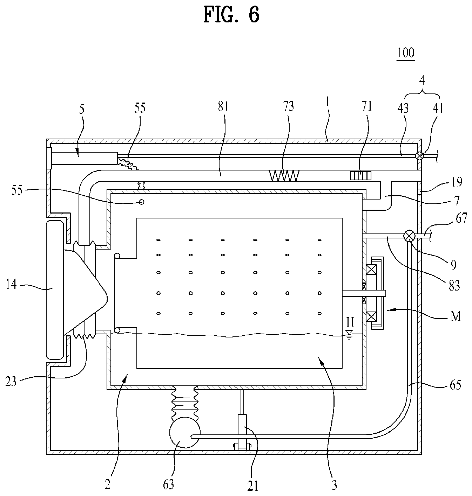

The opening 13 is opened or closed by a door (14 see FIG. 6) rotatably coupled to the cabinet 1.

In addition, a control panel 17 may be mounted to the front panel 11. The control panel 17 serves as a user interface to enable information exchange between a user and a controller (not shown) of the laundry treatment apparatus 100.

More specifically, the control panel 17 includes a power input part 179 which assists the user in inputting a power supply instruction to the laundry treatment apparatus 100 and an input part 175 which assists the user in selecting a laundry treatment method that the laundry treatment apparatus 100 can provide.

The "laundry treatment method" selected via the input part 175 is a set of time-variant control instructions or time-invariant control instructions required to allow the controller (not shown) to control respective devices included in the laundry treatment apparatus 100 so as to supply moisture or air to laundry.

The "laundry treatment method" as described above is typically called a laundry treatment course, a control method of a laundry treatment apparatus or the like. A plurality of laundry treatment methods may be set in the laundry treatment apparatus 100.

In addition, the control panel 17 may further include a display part 177 which displays information regarding the laundry treatment method selected by the user or an operation procedure of the laundry treatment apparatus 100.

The "information regarding the operation procedure of the laundry treatment apparatus" displayed on the display part 177 includes the name of a laundry treatment method selected by the user via the input part 175, a set time for the selected laundry treatment method, a completion target time or remaining time of a laundry treatment method that is being executed, requirements that the laundry treatment apparatus 100 requests the user for execution of the laundry treatment method selected by the user and the like (i.e. information related to operation of the laundry treatment apparatus 100).

The laundry receptacles accommodated in the cabinet 1 may include a tub 2 in which wash water is stored and a drum 3 in which laundry is stored, the drum 3 being rotatably accommodated in the tub 2.

The tub 2 has a cylindrical shape and is fixed in the cabinet 1 via tub support members 21. The tub 2 has a tub opening 22 formed in a front surface thereof to communicate with the opening 13.

A gasket 23 is interposed between the tub opening 22 and the opening 13. The gasket 23 may serve not only to prevent vibration generated by the tub 2 from being transmitted to the cabinet 1, but also to prevent leakage of wash water stored in the tub 2. To this end, the gasket 23 may be formed of an elastic material, such as rubber.

The drum 3 is rotatably supported in the tub 2 via a drive unit (M, see FIG. 6) that is mounted to a rear surface of the tub 2. The drum 3 has a drum opening 31 communicating with the tub opening 22 and through-holes 33 perforated in the circumference of the drum 3.

The circulation duct 7 serves as a flow path through which interior air of the tub 2 is discharged from the tub 2 and then is again guided into the tub 2. The circulation duct 7 may be installed on the top of an outer circumferential surface of the tub 2.

To couple with the circulation duct 7, the tub 2 may have a first communication portion 26 and a second communication portion 27.

As exemplarily shown in FIG. 2, the first communication portion (26, i.e. duct communication portion) serves as a flow path through which interior air of the tub 2 is guided to the circulation duct 7, and the second communication portion 27 serves as a flow path through which air introduced into the circulation duct 7 is guided to the tub 2.

The second communication portion 27 may be formed in the gasket 23. That is, the second communication portion 27 takes the form of an aperture formed in the gasket 23 and an air outlet of the circulation duct 7 may be fitted into the aperture formed in the gasket 23.

Although both the first communication portion 26 and the second communication portion 27 may be formed in the circumference of the tub 2, positioning the second communication portion 27 at the gasket 23 may guide air discharged from the circulation duct 7 to the center of the drum 3 through the drum opening 31, which may advantageously increase heat exchange efficiency between laundry and the air.

The heating unit, provided to supply heated air into the tub 2, may include a fan 71 and a heater 73 which are accommodated in the circulation duct 7. The fan 71 serves not only to move interior air of the tub 2 into the circulation duct 7 through the first communication portion 26, but also to move the air introduced into the circulation duct 7 to the second communication portion 27. The heater 73 serves to heat the air moved to the second communication portion 27 by the fan 71.

In this case, the first communication portion 26 and the second communication portion 27 may be located in a diagonal direction on the basis of a cross section of the tub 2 parallel to the ground on which the cabinet 1 is supported. The heater 73 may be located such that a portion of the heater 73 extends in a longitudinal direction of the circulation duct 7. Increase in the length of the flow path defined by the circulation duct 7 serves to achieve sufficient time required to heat air moving through the circulation duct 7.

In the laundry treatment apparatus 100 of the present invention, some of air to be supplied to the heater 73 is introduced through the suction duct 81 and some of hot air supplied into the tub 2 is discharged from the tub 2 through the exhaust duct 83.

The suction duct 81 may be located in a flow path along which interior air of the tub 2 is guided to the fan 71. This serves to allow interior air of the tub 2 as well as outside air of the tub 2 to be introduced into and circulated through the circulation duct 7 by the fan 71 installed in the circulation duct 7 without providing the suction duct 81 with an additional air introduction device.

FIG. 2 shows a case in which the suction duct 81 causes outside air of the tub 2 to be introduced into the circulation duct 7 through the first communication portion 26 by way of example. In this case, negative pressure is applied to the first communication portion 26 upon rotation of the fan 71, causing interior air of the tub 2 as well as outside air of the tub 2 to be introduced into the circulation duct 7.

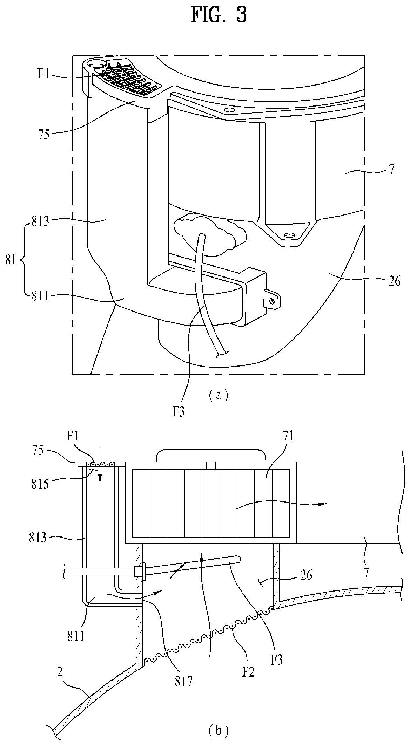

Meanwhile, as exemplarily shown in FIG. 3, the suction duct 81 according to the present invention does not require a control device (e.g., a valve) to control opening/closing of the suction duct 81. That is, the suction duct 81 according to the present invention may be continuously kept open.

The suction duct 81 may be comprised of a coupling section 811 communicating with the first communication portion 26 and an extension section 813 extending from the coupling section 811 to the circulation duct 7. In this case, the extension section 813 may be provided with a suction port 815 for introduction of outside air and the coupling section 811 may be provided with a discharge port 817 for connection between the suction duct 81 and the first communication portion 26.

The extension section 813 may extend from the coupling section 811 in a height direction of the tub 2 by a predetermined length. This serves to prevent bubbles generated by detergent during washing of laundry from being discharged from the tub 2 through the suction duct 81.

The suction duct 81 according to the present invention has one end fixed to the tub 2 and the other end fixed to the circulation duct 7. This configuration is achieved as the circulation duct 7 according to the present invention is fixed at the top of the outer circumferential surface of the tub 2.

Considering the laundry treatment apparatus 100 of the present invention in terms of a vibration system, the circulation duct 7 and the tub 2 will exhibit almost the same vibration and, therefore, the vibration has no effect on the durability of the suction duct 81 installed to interconnect the tub 2 and the circulation duct 7.

Assuming a configuration in which the circulation duct 7 is fixed at the cabinet 1 rather than being fixed at the top of the outer circumferential surface of the tub 2, the circulation duct 7 will vibrate irrespective of vibration of the tub 2, which makes it difficult to maintain durability of the suction duct 81 without an additional vibration absorbing device.

To fix a free end of the suction duct 81 (i.e. the end of the suction duct 81 provided with the suction port 815), the circulation duct 7 may further include a fixing portion 75 to which the suction port 815 is connected.

The fixing portion 75 may have any one of various shapes so long as the free end of the suction duct 81 can be fixed thereto. FIG. 3 shows a case in which the fixing portion 75 takes the form of a board connecting the circulation duct 7 and the suction port 815 to each other by way of example.

In addition, the suction duct 81 may further include a first filter F1 which filters air to be introduced into the extension section 813. In consideration of the fact that outside air of the tub 2 is supplied into the tub 2 through the suction duct 81, provision of the filter F1 as described above serves to prevent laundry received in the tub 2 from being contaminated by impurities contained in the outside air and to prevent malfunction of the heating unit 71 and 73 due to the impurities.

In this case, the first filter F1 may be installed in a hole perforated in the fixing portion 75 and the suction port 815 may be fixed to the fixing portion 75 to surround the first filter F1.

Meanwhile, a second filter F2 may be installed in the first communication portion 26 to filter interior air of the tub 2 to be introduced into the circulation duct 7.

The first filter F1 is kept exposed outward of the circulation duct 7, thus being easily washable. On the other hand, the second filter F2 is not exposed outward of the circulation duct 7 and, thus, washing of the second filter F2 is difficult. For this reason, according to the present invention, a filter washer F3 to wash the second filter F2 may be additionally provided.

The filter washer F3 may be installed at any position in the first communication portion 26 so long as wash water can be ejected to the second filter F2 to remove impurities remaining on the second filter F2. In FIG. 3, (b) shows a case in which the filter washer F3 is located between the second filter F2 and the fan 71 by way of example.

In this case, to avoid interference with the filter washer F3, the coupling section 811 may extend in a width direction of the tub 2 by a predetermined length and thereafter be joined with the extension section 813.

The exhaust duct 83 may be installed at any position of the tub 2 so long as it can discharge some of air introduced into the tub 2 through the circulation duct 7 to the outside of the tub 2.

FIG. 1 shows a case in which the exhaust duct 83 is installed to a third communication portion 28 formed at an upper position of the circumference of the tub 2 by way of example. When air is suctioned into the tub 2 by the fan 71, the interior of the tub 2 becomes a positive pressure state, causing some of the interior air of the tub 2 to be discharged to the outside of the tub 2 having atmospheric pressure through the exhaust duct 83 and the remaining interior air of the tub 2 to move into the circulation duct 7 through the first communication portion 26 having negative pressure.

To allow only some of air, supplied into the tub 2 through the circulation duct 7, to be discharged through the exhaust duct 83, the cross sectional area of the exhaust duct 83 may be less than the cross sectional area of the first communication portion 26 (or the cross sectional area of the circulation duct 7).

Meanwhile, to maintain a constant flow rate of air to be supplied into the tub 2, the flow rate of air that can be discharged from the exhaust duct 83 (exhaustion capacity) may be equal or similar to the flow rate of air that can be suctioned into the suction duct 81 (suction capacity).

Although the exhaust duct 83 may be configured to communicate the interior of the tub 2 with the outside of the cabinet 1 so as to guide air introduced through the exhaust duct 83 to the outside of the cabinet 1, the exhaust duct 83 may be connected to a drain unit 6 that serves to discharge wash water from the tub 2.

When the exhaust duct 83 is in direct communication with the outside of the cabinet 1, air discharged from the exhaust duct 83 may be condensed on an indoor wall because the air discharged through the exhaust duct 83 is humid air.

The laundry treatment apparatus 100 of the present invention may solve the problem as described above by connecting the exhaust duct 83 to the drain unit 6 that is included to discharge wash water in the tub 2 to the outside of the cabinet 1.

In this case, a flow path switchover unit 9 may be installed at a junction of the exhaust duct 83 and the drain unit 6 to control opening/closing of the exhaust duct 83 and the drain unit 6. This serves to prevent air discharged through the exhaust duct 83 from entering the tub 2 and to prevent water discharged through the drain unit 6 from entering the tub 2.

The drain unit 6 according to the present invention may include a first drain flow path 61 and a pump 63 which serve to discharge wash water from the tub 2, a second drain flow path 65 through which the wash water having passed through the pump 83 is guided to the flow path switchover unit 9 and a third drain flow path 67 through which water directed to the flow path switchover unit 9 is guided to an outdoor location (not shown), such as a drain.

The flow path switchover unit 9 installed at the junction of the exhaust duct 83 and the drain unit 6 may be located higher than the set maximum water level (H, see FIG. 6) of the tub 2.

Conventional laundry treatment apparatuses generally include a structure (hereinafter referred to as water trap) to prevent water in a flow path connected to the outdoor location (i.e. the aforementioned third drain flow path) from being completely discharged, in order to prevent bad smell from entering the laundry treatment apparatus through the third drain flow path.

In a case in which the exhaust duct 83 according to the present invention is connected to the drain unit provided with the water trap, interior air of the tub 2 cannot be discharged from the tub 2 through the exhaust duct 83 during drying of laundry. Therefore, under connection of the exhaust duct 83 to the drain unit of conventional laundry treatment apparatuses, a controller needs to control revolutions per minute of the fan to blow air at pressure sufficient for removal of the water trap.

However, in a case in which the flow path switchover unit 9 is located higher than the set maximum water level of the tub 2 according to the present invention, the exhaust duct 83 serves as an anti-siphon member to create a water trap between the flow path switchover unit 9 and the pump 63 (in the second drain flow path 65), thereby preventing bad smell from entering the tub 2.

In addition, air introduced into the exhaust duct 83 may be discharged from the tub 2 through the flow path switchover unit 9 and the third drain flow path 67, and therefore it is unnecessary to control revolutions per minute of the fan 71 for removal of the water trap.

In addition, through the configuration as described above, even if wash water is supplied to the set maximum water level of the tub 2, it is possible to prevent wash water from being unintentionally discharged from the tub 2 through the drain unit 6.

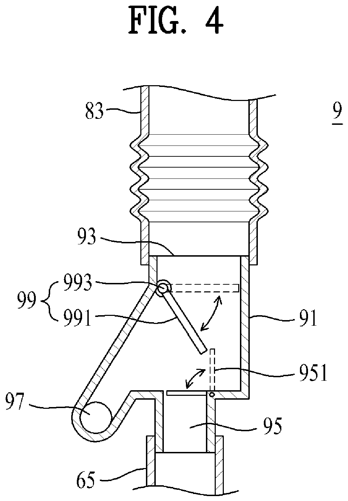

The flow path switchover unit 9 according to the present invention may have a shape as exemplarily shown in FIG. 4.

The flow path switchover unit 9 may include a switchover unit body 91 located at a junction of the exhaust duct 83 and the second drain flow path 65, a duct connection pipe 93 connecting the exhaust duct 83 and the switchover unit body 91 to each other, a flow path connection pipe 95 connecting the second drain flow path 65 and the switchover unit body 91 to each other, and a discharge pipe 97 connecting the third drain flow path 67 and the switchover unit body 91 to each other.

The duct connection pipe 93 and the flow path connection pipe 95 may be arranged to face each other. The duct connection pipe 93 may be located at the top of the switchover unit body 91 and the flow path connection pipe 95 may be located at the bottom of the switchover unit body 91.

In this case, a switchover valve 99 to open or close the duct connection pipe 93 is received in the switchover unit body 91. The switchover valve 99 includes a valve body 991 configured to open or close the duct connection pipe 93 and a valve rotating shaft 993 configured to rotatably couple the valve body 991 to the switchover unit body 91.

The valve body 991 keeps the duct connection pipe 93 open by the weight thereof, but the duct connection pipe 93 is closed by water pressure when wash water is introduced into the switchover unit body 91 through the second drain flow path 65.

Meanwhile, the flow path switchover unit 9 having the configuration as described above may prevent wash water discharged from the tub 2 from entering the tub 2 through the duct connection pipe 93, but may not eliminate the possibility of air discharged from the tub 2 being resupplied to the tub 2 through the flow path connection pipe 95.

As described above, owing to the water trap created in the second drain flow path 65, the present invention may prevent air discharged through the exhaust duct 83 from entering the tub 2. However, the water trap may not be created in the second drain flow path 65 when no discharge of wash water ever happens before drying of laundry.

Accordingly, the flow path switchover unit 9 according to the present invention may further include a flow path valve 951 to open or close the flow path connection pipe 95. The flow path valve 951 may include a check valve which opens the flow path connection pipe 95 only when wash water is introduced into the switchover unit body 91 through the second drain flow path 65.

As exemplarily shown in FIGs. 1 and 2, the laundry treatment apparatus 100 of the present invention may further include a water supply unit 4 which supplies wash water into the tub 2 and a detergent supply unit 5 which supplies detergent into the tub 2.

The water supply unit 4 may include a water supply flow path 43 which connects the tub 2 and the water supply source (not shown) at the outside of the laundry treatment apparatus 100 to each other and a water supply valve 41 which opens or closes the water supply flow path 43 under control of the controller (not shown).

Meanwhile, the detergent supply unit 5 may include a detergent reservoir 53 in which detergent is stored and a tub supply pipe 55 which connects the detergent reservoir 53 and the tub 2 to each other. The water supply flow path 43 may have any shape so long as it can supply water to the detergent reservoir 53. In this case, detergent stored in the detergent reservoir 53 and water required for laundry washing may be supplied into the tub 2 as soon as the controller (not shown) opens the water supply valve 41.

Meanwhile, the detergent reservoir 53 may be withdrawn from the front panel 11. To this end, the detergent supply unit 5 may include a body 51 configured to support the detergent reservoir 53 such that the detergent reservoir 53 may be withdrawn from the front panel 11. The front panel 11 has a reservoir opening 15 through which the detergent reservoir 53 is withdrawn.

In this case, the interior of the detergent reservoir 53 must communicate with the body 51 and the tub supply pipe 55 must be configured to enable communication between the body 51 and the interior of the tub 2.

The controller (not shown) may control the water supply unit 4 to allow the water supply unit 4 to supply water required to cool the tub 2 (required to condense interior air of the tub 2) into the tub 2 (for enhancement of drying efficiency).

In consideration of the fact that humid interior air of the tub 2 may be condensed in the detergent supply unit 5 and supplying water into the tub 2 during drying of laundry may unintentionally cause laundry stored in the drum 3 to be wet, the laundry treatment apparatus 100 of the present invention may further include a water supply guide 25 for communication between the tub supply pipe 55 and the tub 2.

The water supply guide 25 according to the present invention has a feature of defining a water trap (of continuously storing a constant amount of water to prevent communication between the tub 2 and the detergent supply unit 5), so as to prevent interior air of the tub 2 from entering the detergent supply unit 5 and to cause water supplied into the tub 2 via the water supply unit 4 to move to the bottom of the tub 2 along an inner circumferential surface of the tub 2 so as not to reach laundry stored in the drum 3.

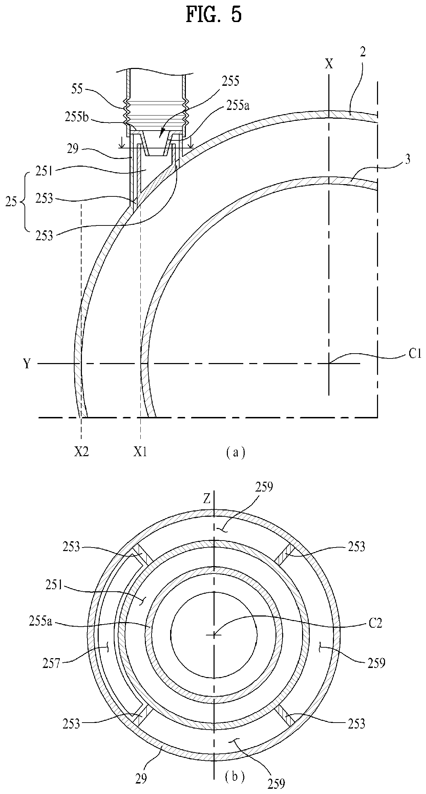

As exemplarily shown in FIG. 5, the water supply guide 25 may be formed in a fourth communication portion (29, i.e. a water supply communication portion) located at an upper position of the circumference of the tub 2.

The fourth communication portion 29, as exemplarily shown in the drawing, may take the form of a pipe protruding from the circumference of the tub 2, or may take the form of an aperture perforated in the circumference of the tub 2.

The water supply guide 25 includes a trap body 251 which is accommodated in the fourth communication portion 29 to provide a water storage space, shims 253 which serve to maintain a constant gap between an outer circumferential surface of the trap body 251 and an inner circumferential surface of the fourth communication portion 29 and a guide pipe 255 which is fixed to the fourth communication portion 29 to guide water supplied through the tub supply pipe 55 into the trap body 251.

The guide pipe 255 may include a guide pipe body 255a configured to guide water into the trap body 251 and a flange 255b formed at the circumference of the guide pipe body 255a to fix the guide pipe body 255a to the fourth communication portion 29.

A diameter of the guide pipe body 255a is determined such that an outer circumferential surface of the guide pipe body 255a is spaced apart from an inner circumferential surface of the trap body 251 by a predetermined distance. A length of the guide pipe body 255a is determined such that the bottom of the guide pipe body 255a, from which water is discharged, is spaced apart from the bottom of the trap body 251 by a predetermined distance.

The flange 255b must be configured to clog a space between the outer circumferential surface of the guide pipe body 255a and the inner circumferential surface of the fourth communication portion 29. As exemplarily shown in FIG. 5, the flange 255b may be supported by an upper surface of the fourth communication portion 29.

Accordingly, water supplied into the detergent reservoir 53 through the water supply flow path 43 is supplied into the trap body 251 through the tub supply pipe 55 and the guide pipe body 255a and, in turn, the water supplied into the trap body 251 is introduced into the tub 2 through a space between the inner circumferential surface of the trap body 251 and the outer circumferential surface of the guide pipe body 255a and a space between the outer circumferential surface of the trap body 251 and the inner circumferential surface of the fourth communication portion 29.

A constant amount of water is always stored in the trap body 251 and the bottom of the guide pipe body 255a (not provided with the flange 255b) is continuously immersed in the water stored in the trap body 251, which prevents humid air within the tub 2 from being supplied into the detergent supply unit 5.

In addition, the water supply guide 25 as described above is located in the fourth communication portion 29 at a position spaced apart from a vertical line X passing a rotation center C1 of the drum 3 in a width direction Y of the tub 2 by a predetermined distance. As such, the water supply guide 25 may function to prevent water supplied into the tub 2 during drying from reaching laundry stored in the drum 3.

Moreover, the effects as described above may be maximized by positioning the fourth communication portion 29 such that the water supply guide 25 is located between a vertical line X1 as a tangent in relation to the circumference of the drum 3 and a vertical line X2 as a tangent in relation to the circumference of the tub 2 in a height direction of the tub 2.

Meanwhile, in a case in which positioning the water supply guide 25 at the above-described position is difficult, a flow path defined in the water supply guide 25 may be positioned at the above-described position to achieve the effects as described above.

As exemplarily shown in (b) of FIG. 5, the plural shims 253 may be arranged on the outer circumferential surface of the trap body 251 to fix the trap body 251 to the fourth communication portion 29. Space between the respective two neighboring shims 253 serve as flow paths through which water inside the trap body 251 is introduced into the tub 2.

Accordingly, when some of the spaces between the respective neighboring shims 253 have closed planes 259 and the other spaces have open planes 257 and each open plane 257 is located between the vertical line X1 as a tangent in relation to the circumference of the drum 3 and the vertical line X2 as a tangent in relation to the circumference of the tub 2, it is possible to prevent water supplied into the tub 2 during drying from reaching laundry.

That is, the open plane 257 may take the form of a semicircle or arc located farther away from the vertical line X passing the rotation center C1 of the drum 3 on the basis of a line Z that passes a center C2 of the fourth communication portion 29 and is parallel to the longitudinal direction of the tub 2.

When the open plane 257 has an arc shape, the length of the open plane 257 may be a quarter of the perimeter of the trap body 251 or more and less than the perimeter of the trap body 251. When viewed in terms of angle, the center of the arc-shaped open plane 257 may be 45 degrees or more and less than 180 degrees on the basis of the center C2 of the fourth communication portion 29.

The shape and positional features of the open plane 257 as described above are given to prevent water supplied during drying from reaching laundry and to minimize increase of a water supply time during washing.

Hereinafter, a drying system (a process of drying laundry by supplying heated air to the laundry) realized by the laundry treatment apparatus 100 of the present invention as described above will be described with reference to FIG. 2.

When the fan 71 is operated, interior air of the tub 2 is introduced into the circulation duct 7 through the first communication portion 26 and, in turn, the air introduced into the circulation duct 71 is heated by the heater 73 and thereafter supplied into the tub 2 through the second communication portion 27. The air supplied into the tub 2 undergoes heat exchange with laundry stored in the drum 3 and thereafter moves to the first communication portion 26.

The surface of the tub 2 is kept at a lower temperature than that at the center of the tub 2 because of heat exchange between the tub 2 and interior air of the cabinet 1 (or air introduced into the cabinet 1 through a cabinet opening 19, for example). Accordingly, as air discharged from the drum 3 is cooled while moving to the first communication portion 26, some of moisture contained in the air is condensed at the inner circumferential surface of the tub 2.

That is, the tub 2, the circulation duct 7, the fan 71 and the heater 73 according to the present invention constitute a circulation drying system (including a first heat exchange flow path and the heating unit) that implements dehumidification of air discharged from the tub 2, heating of the dehumidified air and resupply of the heated air to the tub 2.

Meanwhile, some of the air exchanged heat with the laundry is discharged from the tub 2 through the exhaust duct 83 and the remaining air is collected into the circulation duct 7 through the first communication portion 26. In this process, the air is mixed with outside air introduced into the tub 2 through the suction duct 81.

Although the air discharged from the drum 3 is dehumidified via heat exchange with the tub 2 while moving to the first communication portion 26, the air collected in the circulation duct 7 may have difficulty in remaining in a sufficiently dehumidified state according to the quantity of laundry (i.e. the quantity of laundry stored in the drum 3). The exhaust duct 83 and the suction duct 81 serve to solve this problem.

That is, according to the present invention, some of air introduced into the first communication portion 26 is discharged from the cabinet 1 through the exhaust duct 83, which may reduce the quantity of humid air to be introduced into the circulation duct 7. In addition, dry air (outside air of the tub 2) supplied through the suction duct 81 is mixed with air moved from the tub 2 to the circulation duct 7, which may reduce the humidity of air to be directed to the heater 73 to a desired level.

The suction duct 81, the fan 71, the heater 73 and the exhaust duct 83 according to the present invention constitute an exhaust drying system (including a second heat exchange flow path and the heating unit) that serves not only to heat outside air of the tub 2 so as to supply the heated air into the tub 2, but also to discharge some of air exchanged heat with laundry from the tub 2.

Accordingly, owing to a combined drying system of the circulation drying system and the exhaust drying system, the present invention may prevent deterioration of drying efficiency regardless of the quantity of laundry or the kind of laundry (regardless of the humidity of air discharged from the tub 2).

To achieve the effects as described above, the exhaust duct 83 and the suction duct 81 may always remain in an open state during drying and the quantity of air introduced into the circulation duct 7 through the suction duct 81 (suction capacity) and the quantity of air discharged from the tub 2 through the exhaust duct 83 (exhaust capacity) may be equal to each other.

Meanwhile, the exhaust capacity may be set to be greater than the suction capacity when coincidence of the suction capacity and the exhaust capacity is difficult, although coincidence of the suction capacity and the exhaust capacity provides maximum drying efficiency.

When the suction capacity is greater than the exhaust capacity, this increases the quantity of hot air supplied into the tub 2 and, in turn, increase in the quantity of hot air supplied into the tub 2 means increase in the quantity of air to be dehumidified in the tub 2. Thus, when the suction duct 81 and the exhaust duct 83 are configured such that the suction capacity is greater than the exhaust capacity, drying laundry without using cooling water may cause deterioration of drying efficiency. Accordingly, the exhaust capacity may be set to be greater than the suction capacity.

Although the drying system as described above has a risk of increasing drying time according to the quantity of laundry, the present invention has solved this problem via control of the water supply unit 4. That is, the drying system according to the present invention may solve the above-described risk as the controller (not shown) controls the water supply unit 4 so as to supply water to the inner circumferential surface of the tub 2 during drying of laundry.

This is because supplying water via the water supply unit 4 to the inner circumferential surface of the tub 2 during drying causes rapid cooling of the inner circumferential surface of the tub 2, which may allow air introduced into the circulation duct 7 to remain at a low humidity (in other words, may allow air introduced into the circulation duct 7 to remain at high dryness).

The water supplied into the tub 2 via the water supply unit 4 moves to the drain unit 6 along the inner circumferential surface of the tub 2 under guidance of the water supply guide 25 and, therefore, there is substantially less risk of the water reaching laundry stored in the drum 3 thus causing increased drying time.

Meanwhile, to conserve water, supplying water into the tub 2 via the water supply unit 4 is implemented according to user selection. To this end, the control panel 17 may further include a first mode selection part 171 for drying of laundry via supply of water into the tub 2 and a second mode selection part 173 for drying of laundry without supply of water into the tub 2 (see (b) of FIG. 1).

Meanwhile, the laundry treatment apparatus 100 of the present invention as described above may have a configuration as exemplarily shown in FIG. 6.

The laundry treatment apparatus 100 as exemplarily shown in FIG. 6 has substantially the same configuration as the laundry treatment apparatus as exemplarily shown in FIGs. 1 to 5 except for a connection relationship between the circulation duct 7, the suction duct 81 and the exhaust duct 83.

More specifically, according to the present embodiment, the tub 2 receives outside air (interior air of the cabinet 1 or outside air of the cabinet 1) through the suction duct 81, interior air of the tub 2 is discharged from the exhaust duct 83, and some of the interior air of the tub 2 is guided to the suction duct 81 through the circulation duct 7 (connection duct).

The fan 71 and the heater 73 are accommodated in the suction duct 81, and the circulation duct 7 is connected to a flow path of the suction duct 81 through which air is guided to the fan 71 (i.e. the circulation duct is connected between the fan 71 and an inlet of the suction duct 81).

In the present embodiment, similarly, the circulation drying system is defined by a first heat exchange flow path and the heating unit 71 and 73. The first heat exchange flow path is constructed by the tub 2, the circulation duct 7 (connection duct) and a partial flow path of the suction duct 81 through which air having passed through the fan 71 is guided into the tub 2.

Meanwhile, in the present embodiment, the exhaust drying system is defined by a second heat exchange flow path and the heating unit 71 and 73, and the second heat exchange flow path is constructed by the suction duct 81, the tub 2 and the exhaust duct 83.

Accordingly, the present embodiment may also have the same effects as those of the above embodiment described with reference to FIGs. 1 to 5.

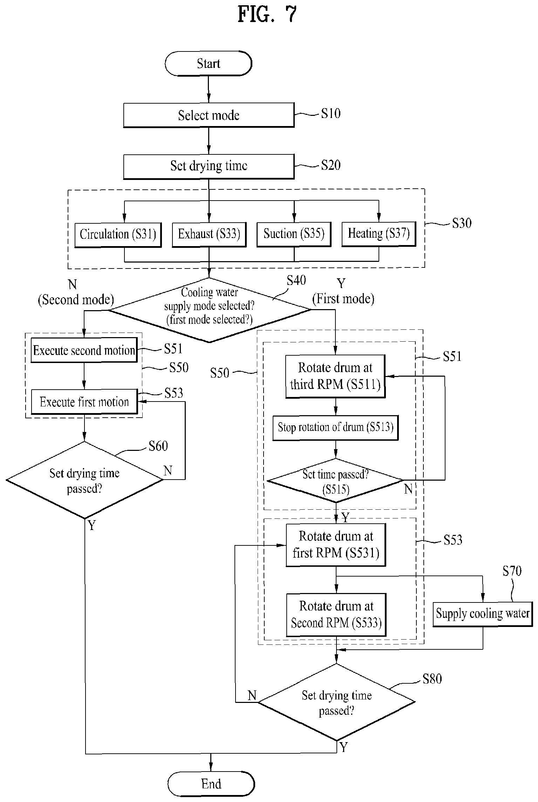

FIG. 7 shows a control method of the laundry treatment apparatus 100 as described above. The control method of the laundry treatment apparatus 100 according to the present invention may include drying operation S30 for supplying heated air into the tub 2 and motion execution operation S50 for rotating the drum 3 based on predetermined motion during implementation of the drying operation S30.

The drying operation S30 includes a circulation process S31 for discharging interior air of the tub 2 from the tub 2 and thereafter resupplying the air to the tub 2, an exhaust process S33 for discharging some of the air supplied into the tub 2 from the tub 2, a suction process S35 for mixing circulated air via the circulation process S31 with outside air of the tub 2 and a heating process S37 for heating the air to be supplied into the tub 2.

The circulation process S31 is a process in which interior air of the tub 2 moves through the circulation duct 7 via operation of the fan 71. The circulation process S31 is initiated simultaneously with operation of the fan 71. During the circulation process S31, only some of the interior air of the tub 2 is introduced into the circulation duct 7. That is, some of the interior air of the tub 2 is resupplied to the tub 2 via the circulation process S31 and some of the interior air of the tub 2 is discharged from the tub 2 via the exhaust process S33.

The exhaust process S33 is implemented using the exhaust duct 83 and, therefore, air discharged from the tub 2 via the exhaust process S33 moves to the outside of the laundry treatment apparatus 100 through the flow path switching unit 9 and the third drain flow path 67.

The suction process S35 is implemented using the suction duct 81 and the suction duct 81 is installed to the first communication portion 26 that connects the circulation duct 7 and the tub 2 to each other. Therefore, it will be appreciated that the suction process S35 is initiated when the circulation process S31 is initiated by operation of the fan 71.

The heating process S37 is a process of heating mixed air in the circulation duct 7 using the heater 73, the mixed air being acquired via the circulation process S31 and the suction process S35.

Through the drying operation S30 as described above, the present invention may implement supply of heated air, dehumidification of air exchanged heat with laundry, re-heating of some of air discharged from the tub, exhaust of some of air discharged from the tub and supply of reheated air to laundry.

The motion execution operation S50 is implemented during the drying operation S30. The motion execution operation S50 may be implemented to execute any one of first motion and second motion, or a first motion execution process S53 and a second motion execution process S51 may be implemented in a preset sequence.

The first motion execution process S53 is a process of rotating the drum 3 based on first motion. The first motion is motion in which the drum 3 is rotated in any one direction among a clockwise direction and a counterclockwise direction to cause laundry to repeatedly come into close contact with and be separated from the inner circumferential surface of the drum 3 (without tumbling), thereby achieving enhanced heat exchange efficiency between the laundry and hot air supplied into the tub 2.

The first motion execution process S53 may include a process of rotating the drum 3 at first Revolutions Per Minute (RPM) (reference RPM) (S531), the first RPM being RPM at which the centrifugal force of laundry caused via rotation of the drum 3 becomes greater than the weight of laundry, a process of rotating the drum 3 at second RPM (S533), the second RPM being set to be greater than the first RPM, and a process of repeating the two processes S531 and S533 a predetermined number of times or for a predetermined time.

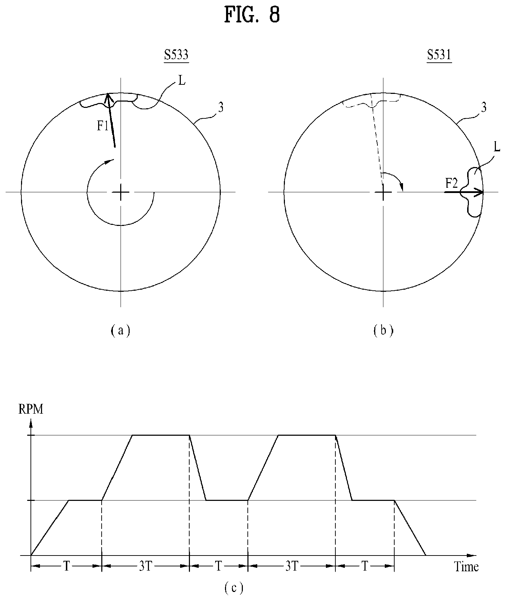

In the process of rotating the drum 3 at the first RPM S531 and in the process of rotating the drum 3 at the second RPM S533, the drum 3 is rotated in the same direction and the first RPM and the second RPM are RPMs that cause laundry to be rotated along with the drum 3. Therefore, during the first motion execution process S53, laundry will exhibit movement as exemplarily shown in FIG. 8.

That is, when the drum 3 is rotated at the first RPM, laundry L remains in close contact with the inner circumferential surface of the drum 3 for a given time ((b) of FIG. 8). When the drum 3 is rotated at the second RPM, the laundry L remains in close contact with the inner circumferential surface of the drum 3 for a given time, but comes into closer contact with the inner circumferential surface of the drum 3 than when the drum 3 is rotated at the first RPM ((a) of FIG. 8).

This is because the second RPM is greater than the first RPM and, therefore, the centrifugal force of laundry L caused when the drum 3 is rotated at the second RPM is greater than the centrifugal force of laundry L caused when the drum 3 is rotated at the first RPM.

The reason for setting the first RPM and the second RPM to values that cause the laundry L to come into close contact with the inner circumferential surface of the drum 3 so as to be rotated along with the drum 3 is to attain a space for movement of hot air within the drum 3. Through this first motion, the surface area of laundry L that may come into contact with hot air supplied into the tub 2 is maximized, which may increase heat exchange efficiency between the laundry L and the hot air supplied into the tub 2.

Meanwhile, the reason for setting the first RPM and the second RPM to different values is to allow the through-holes 33 of the drum 3 to be opened and closed by the laundry L. That is, this serves to confine hot air in the drum 3 while the drum 3 is rotated at the second RPM and to discharge interior air of the drum 3 into the tub 2 while the drum 3 is rotated at the first RPM.

In the case of conventional laundry treatment apparatuses, some of hot air introduced into the drum 3 is discharged to the tub 2 after undergoing heat exchange with laundry, but some of the air introduced into the drum 3 is directly discharged to the tub 2 through the through-holes 33 of the drum 3 without heat exchange with laundry. Therefore, the conventional laundry treatment apparatuses suffer from increased energy consumption due to low heat exchange efficiency between hot air and laundry.

The present invention may solve the above problem of the conventional laundry treatment apparatuses by controlling the RPM of the drum 3.

A given quantity of laundry or more will be distributed to cover the entire inner circumferential surface of the drum 3 and come into close contact with the inner circumferential surface of the drum 3 by high centrifugal force when the drum 3 is rotated at the second RPM. Therefore, rotating the drum 3 at the second RPM may minimize discharge of hot air from drum 3 to the tub 2 through the through-holes 33.

In addition, when the drum 1 is rotated at the first RPM, laundry will remain in close contact with the inner circumferential surface of the drum 3 by relatively low centrifugal force and, therefore, hot air may be discharged from the drum 3 to the tub 2 through the through-holes 33.

Time, which is set for the process of rotating the drum 3 at the second RPM S533 to further enhance heat exchange efficiency between laundry and hot air, may be longer than time set for the process of rotating the drum 3 at the first RPM S531.

Since condensation efficiency of air moving to the circulation duct 7 may vary according to a discharge time of hot air from the drum 3 to the tub 2 (i.e. the quantity of hot air discharged to the tub 2), time for rotation of the drum 3 at the first RPM and time for rotation of the drum 3 at the second RPM are set to a given ratio. FIG. 8 shows a case in which a ratio of the time for rotation of the drum 3 at the first RPM to the time for rotation of the drum 3 at the second RPM is 1:3 by way of example.

Meanwhile, the second motion execution process S51 is a process of rotating the drum 3 based on second motion. The second motion is motion in which rotation and rotation stop of the drum 3 are repeated to cause the laundry L to fall from above a horizontal line Y passing the rotation center C1 of the drum 3 (i.e. motion to facilitate agitation of laundry and to increase heat exchange efficiency).

As exemplarily shown in FIG. 7, the second motion execution process S51 may include a process of rotating the drum 3 at third RPM (S511), a process of stopping rotation of the drum 3 before the drum 3 completes 1 revolution (S513) and a process of repeating the two processes S511 and S513 a predetermined number of times or for a predetermined time (S515).

The third RPM is RPM at which the centrifugal force of laundry caused via rotation of the drum 3 becomes greater than the weight of laundry. The third RPM may be equal to any one of the first RPM or the second RPM.

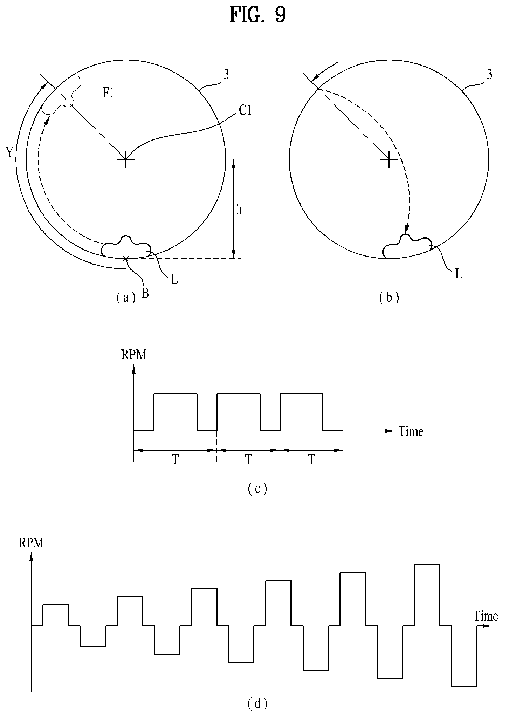

The process of stopping rotation of the drum 3 S513 is initiated when laundry is raised above half the height h of the drum 3. Thus, during implementation of the second motion execution process S51, laundry will exhibit movement as exemplarily shown in FIG. 9.

That is, when the drum 3 is rotated at the third RPM (S511), the laundry L is rotated along with the drum 3 while coming into close contact with the inner circumferential surface of the drum 3 ((a) of FIG. 9). Upon rotation stop of the drum 3 when the laundry L is raised above half the height h of the drum 3, the laundry L falls from above the horizontal line Y to the inner circumferential surface of the drum 3 below the horizontal line Y ((b) of FIG. 9).

Through this second motion, the surface area of laundry L exposed to hot air supplied into the drum 3 is increased and moisture contained in the laundry L is easily separated when the laundry L collides with the inner circumferential surface of the drum 3. In this way, the present invention may achieve increased heat exchange efficiency between hot air and laundry (increased drying efficiency).

In addition, the second motion prevents the laundry L from becoming entangled in the drum 3 because the laundry L is repeatedly raised and drops in the drum 3.

To maximize the effects as described above, the process of stopping rotation of the drum 3 S513 may be implemented by applying torque to the drum 3 in a direction opposite to a rotating direction of the drum 3 (i.e. a rotating direction of the drum 3 at a point in time when the process of stopping rotation of the drum 3 S513 is initiated. This serves to provide the laundry L with greater shock force.

In addition, the process of stopping rotation of the drum 3 S513 may be implemented when the laundry L is rotated by an angle of 90 degrees or more and less than 180 degrees on the basis of the lowermost point B of the rotation track of the drum 3.

The second motion as described above may be set to allow the drum 3 to be rotated in any one direction among a clockwise direction and a counterclockwise direction as exemplarily shown in (c) of FIG. 9, and may be set to allow the drum 3 to alternately implement clockwise rotation and counterclockwise rotation as exemplarily shown in (d) of FIG. 9.

The process of rotating the drum 3 at the third RPM S511 and the process of stopping rotation of the drum 3 S513 are repeated a predetermined number of times or for a predetermined time. The third RPM may be gradually increased whenever the second motion is repeated.

That is, assuming that the second motion is implemented plural times, RPM for initial execution of second motion may be less than RPM for subsequent execution of second motion (see (d) of FIG. 9).

In addition, the third RPM set for the process of rotating the drum 3 S511 may be increased whenever the second motion is repeated and then reduced after the second motion is repeated a predetermined number of times.

Gradually increasing the third RPM whenever the second motion is repeatedly executed may ensure easy removal of moisture contained in laundry.

Meanwhile, the second motion execution process S51 as described above may be implemented before the first motion execution process S53. This serves to prevent laundry from becoming entangled in the drum 3 via the second motion, thereby allowing the laundry to be uniformly distributed at the inner circumferential surface of the drum 3 during execution of the first motion.

In addition, time set for the first motion execution process S53 may be longer than time set for the second motion execution process S51. This serves to increase time during which hot air supplied into the drum 3 remains in the drum 3, thereby increasing heat exchange efficiency between laundry and hot air.

Although the control method of the present invention may include only the drying operation S30 and the motion execution operation S50 as described above, the control method may further include cooling water supply operation S70 as exemplarily shown in FIG. 7. The cooling water supply operation S70 is implemented to supply water to the inner circumferential surface of the tub 2 during the motion execution operation S50, thereby cooling the inner circumferential surface of the tub 2 exchanged heat with air discharged from the drum 3.

The cooling water supply operation S70 according to the present invention may be implemented according to user selection. To this end, the control method of the present invention may further include mode selection operation S10 for setting whether or not to implement the cooling water supply operation S70 prior to initiating the drying operation S30.

In the mode selection operation S10, the user may input a control instruction using the first mode selection part 171 and the second mode selection part 173 provided at the control panel 17.

The first mode selection part 171 is used to select a control method (so-called 'turbo drying mode') for executing the cooling water supply operation S70 during the motion execution operation S50, and the second mode selection part 173 is used to select a control method (so-called 'blow drying mode') for implementing the motion execution operation S50 without the cooling water supply operation S70.

Meanwhile, in the mode selection operation S10, the controller (not shown) selects a first mode including the cooling water supply operation S70 according to the quantity of laundry stored in the drum 3 without input of a user instruction.

In any case, the control method of the present invention includes judging whether or not the first mode is selected upon initiation of the drying operation S30 (S40).

When the first mode is not selected (when the second mode is selected), the control method of the present invention executes only the second motion execution process S51 and the first motion execution process S53 in sequence. However, when the first mode is selected, the control method of the present invention executes the cooling water supply operation S70 during the first motion execution process S53.

Heat exchange efficiency between laundry and hot air is low at the initial stage of the drying operation S30. Dryness of laundry has substantially no variation until the laundry reaches a given temperature and is rapidly increased from a point in time when the laundry reaches the given temperature.

This is because moisture contained in laundry is not evaporated until the laundry reaches a given temperature. Such rapid increase in the dryness of laundry means that the humidity of air discharged from the drum 3 is increased as the drying operation S30 is implemented.

Accordingly, in terms of drying of laundry, cooling the tub 2 during the first motion execution process S53, which is initiated when a given time has passed after initiation of the drying operation S30 (i.e. initiated when the second motion execution process S51 ends), is more advantageous than cooling the tub 2 during the second motion execution process S51 which is initiated upon initiation of the drying operation S30.

Moreover, the cooling water supply operation S70 may be implemented during the process of rotating the drum 3 at the second RPM S533 which is included in the first motion execution process S51.

Thereby, even if water supplied into the tub 2 through the water supply unit 4 unintentionally moves to the drum 3, it is possible to prevent the water from reaching laundry in the drum 3 (this is because high RPM of the drum 3 causes water colliding with the outer circumferential surface of the drum 3 to move away from the drum 3).

Thereafter, the control method of the present invention includes judging whether or not time taken for the drying operation S30 and the motion execution operation S50 exceeds drying time set in drying time setting operation S20 (S80), and ends the drying operation S30 and the motion execution operation S50 based on the judged result.

The drying time setting operation S20 may be implemented prior to initiation of the drying operation S30. In the drying time setting operation S20, the controller (not shown) may set drying time based on the quantity of laundry, or the user may input the drying time using the control panel 17.

As is apparent from the above description, the present invention has the effect of providing a laundry treatment apparatus having an advanced concept drying system which may reduce consumption of energy and cooling water required to dry laundry, and a control method thereof.

In addition, the present invention has the effect of providing a laundry treatment apparatus having a drying system which may achieve enhanced drying efficiency, and a control method thereof.

In addition, the present invention has the effect of providing a laundry treatment apparatus having a cooling water supply structure which may prevent cooling water from reaching laundry to be dried, and a control method thereof.

It will be apparent to those skilled in the art that various modifications and variations can be made without departing from the scope of the claims. Thus, it is intended that the present disclosure covers the modifications and variations of this invention provided they come within the scope of the appended claims.

## Claims

1. A laundry treatment apparatus (100) comprising:
a tub (2) configured to provide a space for wash water to be stored;
a drum (3) inside the tub (2), the drum (3) being configured to store laundry therein;
a circulation duct (7) configured to receive air from the tub (2) and resupply the air back into the tub (2);
a fan (71) in the circulation duct (7) configured to circulate air in the tub (2);
a heater (73) in the circulation duct (7) configured to heat air in the circulation duct (7);
an exhaust duct (83) configured to discharge some of the air introduced into the tub (2) to the outside of the tub (2);
a suction duct (81) configured to introduce outside air into the tub (2),
a water supply unit (4) configured to supply water to the tub (2), via a detergent supply unit (5), so as to cool the tub (2); and
a water supply guide (25) configured to introduce water supplied from the water supply unit (4) into the tub (2),
wherein the suction duct (81) and the exhaust duct (83) are configured to remain in an open state during operation of the heater (73) and the fan (71);
wherein the water supply unit (4) is configured to supply water into the tub (2) through the circumference of the tub (2) at a position spaced apart from a vertical line passing a rotation centre of the drum (3) by a predetermined distance in a width direction of the tub (2),
wherein the water supply guide (25) is positioned to allow water introduced into the tub (2) to move to the bottom of the tub (2) along an inner circumferential surface of the tub (2), and
wherein the water supply guide (25) forms a water trap configured to always store a constant amount of water to prevent air communication between the tub (2) and the detergent supply unit (5).

2. The apparatus according to claim 1, further comprising a controller configured to control opening and/or closing of the water supply unit (4),
wherein the controller is configured to control the water supply unit (4) to supply water into the tub (2) during operation of the fan (71) and the heater (73) and, optionally,
wherein the controller is further configured to control the RPM of the drum (3) and supply water to the tub (2) while the drum (3) is rotated at a predetermined RPM or more.

3. The apparatus according to any preceding claim, wherein the suction duct (81) is located in a flow path through which interior air of the tub (2) is directed to the fan (71) such that, during operation, outside air of the tub (2) is introduced into the circulation duct (7) through the suction duct (81).

4. The apparatus according to any preceding claim, wherein the cross sectional area of the exhaust duct (83) is less than the cross sectional area of the circulation duct (7), and/or wherein the apparatus is configured such that, during operation, the quantity of air discharged through the exhaust duct (83) is equal to or greater than the quantity of air introduced through the suction duct (81).

5. The apparatus according to any preceding claim, further comprising a drain unit configured to discharge water stored in the tub (2) from the tub (2),
wherein the exhaust duct (83) is connected to the drain unit and, optionally, wherein a junction of the exhaust duct (83) and the drain unit is located higher than the set maximum water level of the tub (2).

6. The apparatus according to claim 5, further comprising a switchover valve configured to open and/or close the exhaust duct (83) and, optionally, further comprising a flow path valve configured to prevent air introduced into the drain unit through the exhaust duct (83) from being supplied to the tub (2).

7. The apparatus according to any preceding claim, wherein the tub (2), the circulation duct (7), the fan (71) and the heater (73) define a first heat exchange flow path, and
wherein the tub (2), the suction duct (81), the fan (71), the heater (73) and the exhaust duct (83) define a second heat exchange flow path.

8. The apparatus according to any preceding claim,
wherein the water supply guide (25) is located at the circumference of the tub (2) at a position spaced apart from a vertical line passing a rotation centre of the drum (3) by a predetermined distance in a width direction of the tub (2) or between a vertical line as a tangent in relation to the circumference of the drum (3) and a vertical line as a tangent in relation to the circumference of the tub (2).

9. The apparatus according to claim 8, wherein the tub (2) further includes a water supply communication portion perforated in the circumference of the tub (2) to communicate with the water supply unit (4),
wherein the water supply guide (25) includes:
a trap body (251) of the water trap accommodated in the water supply communication portion and arranged to provide a space in which water is stored, an outer circumferential surface of the trap body (251) being spaced apart from an inner circumferential surface of the water supply communication portion by a predetermined distance; and
a guide pipe (255) fixed to the water supply communication portion arranged to guide water into the trap body (251), the guide pipe (255) defining a flow path for communication between a space between the outer circumferential surface of the trap body (251) and the inner circumferential surface of the water supply communication portion and the interior of the trap body (251).

10. The apparatus according to claim 9, wherein the space between the outer circumferential surface of the trap body (251) and the inner circumferential surface of the water supply communication portion has an open plane for communication between the interior of the trap body (251) and the interior of the tub (2).

11. The apparatus according to claim 10, wherein the open plane takes the form of a semicircle or arc located further from a vertical line passing through the rotation centre of the drum (3) than a line passing through the centre of the water supply communication portion.

12. The apparatus according to any preceding claim, wherein the suction duct (81) includes:
a suction port arranged to receive outside air, wherein the suction port is fixed to the circulation duct (7); and
a discharge port arranged to supply to the tub (2) the air introduced through the suction port, wherein the discharge port is fixed to the tub (2) and, optionally,
wherein the circulation duct (7) is fixed to an outer circumferential surface of the tub (2).

13. The apparatus according to claim 12, wherein the suction duct (81) further comprises a coupling section provided with the discharge port and an extension section provided with the suction port, wherein the extension section vertically extends from the coupling section by a predetermined length.

14. The apparatus according to any preceding claim, wherein the circulation duct (7) further includes a first filter arranged to filter air introduced by the suction port and, optionally,
further comprising a second filter arranged to filter air directed from the tub (2) to the circulation duct (7) and, further optionally,
further comprising a filter washer configured to supply wash water to the second filter so as to wash the second filter.

## Patentansprüche

1. Wäschebehandlungsvorrichtung (100), aufweisend:
einen Laugenbehälter (2), der dazu ausgebildet ist, einen Raum für zu speicherndes Waschwasser vorzusehen;
eine Trommel (3) innerhalb des Laugenbehälters (2), wobei die Trommel (3) dazu ausgebildet ist, Wäsche darin aufzunehmen;
einen Zirkulationskanal (7), der dazu ausgebildet ist, Luft von dem Laugenbehälter (2) entgegenzunehmen und die Luft wieder dem Laugenbehälter (2) zuzuführen;
einen Ventilator (71) in dem Zirkulationskanal (7), der dazu ausgebildet ist, Luft in dem Laugenbehälter (2) umzuwälzen;
eine Heizvorrichtung (73) in dem Zirkulationskanal (7), die dazu ausgebildet ist, Luft in dem Zirkulationskanal (7) zu erhitzen;
einen Abführkanal (83), der dazu ausgebildet ist, einen Teil der Luft, die in den Laugenbehälter (2) eingeführt wird, aus dem Laugenbehälter (2) nach außen abzuführen; und
einen Saugkanal (81), der dazu ausgebildet ist, Außenluft in den Laugenbehälter (2) einzuführen,
eine Wasserzufuhreinheit (4), die dazu ausgebildet ist, dem Laugenbehälter (2) über eine Waschmittelzufuhreinheit (5) Wasser zuzuführen, um den Laugenbehälter (2) zu kühlen; und
eine Wasserzufuhrführung (25), die dazu ausgebildet ist, Wasser, das von der Wasserzufuhreinheit (4) zugeführt wird, in den Laugenbehälter (2) einzuführen,
wobei der Saugkanal (81) und der Abführkanal (83) dazu ausgebildet sind, während des Betriebs der Heizvorrichtung (73) und des Ventilators (71) in einem offenen Zustand zu bleiben;
wobei die Wasserzufuhreinheit (4) dazu ausgebildet ist, Wasser in den Laugenbehälter (2) durch den Umfang des Laugenbehälters (2) an einer Position zuzuführen, die von einer senkrechten Linie, die durch einen Drehmittelpunkt der Trommel (3) verläuft, in einem vorgegebenen Abstand in einer Breitenrichtung des Laugenbehälters (2) beabstandet ist,
wobei die Wasserzufuhrführung (25) derart angeordnet ist, dass sie ermöglicht, dass sich Wasser, das in den Laugenbehälter (2) eingeführt wird, entlang einer Innenumfangsoberfläche des Laugenbehälters (2) zu dem Boden des Laugenbehälters (2) bewegt, und
wobei die Wasserzufuhrführung (25) eine Wasserfalle bildet, die dazu ausgebildet ist, stets eine konstante Wassermenge zu speichern, um Luftverbindung zwischen dem Laugenbehälter (2) und der Waschmittelzufuhreinheit (5) zu verhindern.

2. Vorrichtung nach Anspruch 1, ferner aufweisend eine Steuerung, die dazu ausgebildet ist, das Öffnen und/oder Schließen der Wasserzufuhreinheit (4) zu steuern,
wobei die Steuerung dazu ausgebildet ist, die Wasserzufuhreinheit (4) zu steuern, um während des Betriebs des Ventilators (71) und der Heizvorrichtung (73) Wasser in den Laugenbehälter (2) zuzuführen und
wobei optional die Steuerung ferner dazu ausgebildet ist, die Drehzahl der Trommel (3) zu steuern und dem Laugenbehälter (2) Wasser zuzuführen, während die Trommel (3) mit einer vorgegebenen Drehzahl oder mehr gedreht wird.

3. Vorrichtung nach einem beliebigen vorhergehenden Anspruch, wobei der Saugkanal (81) in einem Strömungsweg angeordnet ist, durch den Innenluft des Laugenbehälters (2) derart zu dem Ventilator (71) gelenkt wird, dass während des Betriebs Außenluft des Laugenbehälters (2) durch den Saugkanal (81) in den Zirkulationskanal (7) eingeführt wird.

4. Vorrichtung nach einem beliebigen vorhergehenden Anspruch, wobei die Querschnittsfläche des Abführkanals (83) kleiner als die Querschnittsfläche des Zirkulationskanals (7) ist, und/oder wobei die Vorrichtung derart ausgebildet ist, dass während des Betriebs die Luftmenge, die durch den Abführkanal (83) abgeführt wird, größer gleich der Luftmenge ist, die durch den Saugkanal (81) eingeführt wird.

5. Vorrichtung nach einem beliebigen vorhergehenden Anspruch, ferner aufweisend eine Ablaufeinheit, die dazu ausgebildet ist, Wasser, das in dem Laugenbehälter (2) gespeichert ist, aus dem Laugenbehälter (2) abzuführen,
wobei der Abführkanal (83) mit der Ablaufeinheit verbunden ist und wobei optional eine Verbindungsstelle des Abführkanals (83) und der Ablaufeinheit höher angeordnet ist als der eingestellte maximale Wasserpegel des Laugenbehälters (2).

6. Vorrichtung nach Anspruch 5, ferner aufweisend ein Umschaltventil, das dazu ausgebildet ist, den Abführkanal (83) zu öffnen und/oder zu schließen, und optional ferner aufweisend ein Strömungswegventil, das dazu ausgebildet ist, zu verhindern, dass Luft, die durch den Abführkanal (83) in die Ablaufeinheit eingeführt wird, dem Laugenbehälter (2) zugeführt wird.

7. Vorrichtung nach einem beliebigen vorhergehenden Anspruch, wobei der Laugenbehälter (2), der Zirkulationskanal (7), der Ventilator (71) und die Heizvorrichtung (73) einen ersten Wärmetauschströmungsweg definieren und
wobei der Laugenbehälter (2), der Saugkanal (81), der Ventilator (71), die Heizvorrichtung (73) und der Abführkanal (83) einen zweiten Wärmetauschströmungsweg definieren.

8. Vorrichtung nach einem beliebigen vorhergehenden Anspruch,
wobei die Wasserzufuhrführung (25) an dem Umfang des Laugenbehälters (2) an einer Position, die von einer senkrechten Linie, die durch einen Drehmittelpunkt der Trommel (3) verläuft, in einem vorgegebenen Abstand in einer Breitenrichtung des Laugenbehälters (2) beabstandet ist oder zwischen einer senkrechten Linie als Tangente in Bezug auf den Umfang der Trommel (3) und einer senkrechten Linie als Tangente in Bezug auf den Umfang des Laugenbehälters (2) angeordnet ist.

9. Vorrichtung nach Anspruch 8, wobei der Laugenbehälter (2) ferner einen Wasserzufuhrverbindungsabschnitt aufweist, der in dem Umfang des Laugenbehälters (2) perforiert ist, um mit der Wasserzufuhreinheit (4) zu kommunizieren,
wobei die Wasserzufuhrführung (25) aufweist:
einen Fallenkörper (251) der Wasserfalle, der in dem Wasserzufuhrverbindungsabschnitt untergebracht ist und angeordnet ist, um einen Raum vorzusehen, in dem Wasser gespeichert wird, wobei eine Außenumfangsoberfläche des Fallenkörpers (251) in einem vorgegebenen Abstand von einer Innenumfangsoberfläche des Wasserzufuhrverbindungsabschnitts beabstandet ist; und
ein Führungsrohr (255), das an dem Wasserzufuhrverbindungsabschnitt befestigt ist und angeordnet ist, um Wasser in den Fallenkörper (251) zu führen, wobei das Führungsrohr (255) einen Strömungsweg zur Verbindung zwischen einem Raum zwischen der Außenumfangsoberfläche des Fallenkörpers (251) und der Innenumfangsoberfläche des Wasserzufuhrverbindungsabschnitts und dem Inneren des Fallenkörpers (251) definiert.

10. Vorrichtung nach Anspruch 9, wobei der Raum zwischen der Außenumfangsoberfläche des Fallenkörpers (251) und der Innenumfangsoberfläche des Wasserzufuhrverbindungsabschnitts eine offene Fläche zur Verbindung zwischen dem Inneren des Fallenkörpers (251) und dem Inneren des Laugenkörpers (2) aufweist.

11. Vorrichtung nach Anspruch 10, wobei die offene Fläche die Form eines Halbkreises oder Bogens aufweist, die von einer senkrechten Linie, die durch den Drehmittelpunkt der Trommel (3) verläuft, weiter entfernt angeordnet ist als eine Linie, die durch den Mittelpunkt des Wasserzufuhrverbindungsabschnitts verläuft.

12. Vorrichtung nach einem beliebigen vorhergehenden Anspruch, wobei der Saugkanal (81) aufweist:
eine Saugöffnung, die angeordnet ist, um Außenluft entgegenzunehmen, wobei die Saugöffnung an dem Zirkulationskanal (7) befestigt ist; und
eine Abführöffnung, die angeordnet ist, um die Luft, die durch die Saugöffnung eingeführt wird, dem Laugenbehälter (2) zuzuführen, wobei die Abführöffnung an dem Laugenbehälter (2) befestigt ist, und
wobei optional der Zirkulationskanal (7) an einer Außenumfangsoberfläche des Laugenbehälters (2) befestigt ist.

13. Vorrichtung nach Anspruch 12, wobei der Saugkanal (81) ferner einen Kopplungsabschnitt, der mit der Abführöffnung versehen ist, und einen Verlängerungsabschnitt, der mit der Saugöffnung versehen ist, aufweist, wobei sich der Verlängerungsabschnitt senkrecht eine vorgegebene Länge weit von dem Kopplungsabschnitt erstreckt.

14. Vorrichtung nach einem beliebigen vorhergehenden Anspruch, wobei der Zirkulationskanal (7) ferner einen ersten Filter aufweist, der angeordnet ist, um Luft zu filtern, die durch die Saugöffnung eingeführt wird, und optional ferner einen zweiten Filter aufweist, der angeordnet ist, um Luft zu filtern, die von dem Laugenbehälter (2) zu dem Zirkulationskanal (7) geführt wird, und optional ferner einen Filterwäscher aufweist, der dazu ausgebildet ist, dem zweiten Filter Waschwasser zuzuführen, um den zweiten Filter zu waschen.

## Revendications

1. Appareil de traitement du linge (100) comprenant :
une cuve (2) conçue pour fournir un espace de stockage à l'eau de lavage ;
un tambour (3) à l'intérieur de la cuve (2), le tambour (3) étant conçu pour y stocker du linge ;
un conduit de circulation (7) conçu pour recevoir de l'air en provenance de la cuve (2) et le réintroduire dans la cuve (2) ;
un ventilateur (71) dans le conduit de circulation (7) conçu pour faire circuler l'air dans la cuve (2) ;
un dispositif de chauffage (73) dans le conduit de circulation (7) conçu pour chauffer l'air dans le conduit de circulation (7) ;
un conduit d'échappement (83) conçu pour évacuer une partie de l'air introduit dans la cuve (2) hors de la cuve (2) ;
un conduit d'aspiration (81) conçu pour introduire de l'air extérieur dans la cuve (2) ;
une unité d'alimentation en eau (4) conçue pour apporter de l'eau dans la cuve (2) via une unité d'alimentation en détergent (5) afin de refroidir la cuve (2) ; et
un guide d'alimentation en eau (25) conçu pour introduire l'eau fournie depuis l'unité d'alimentation en eau (4) dans la cuve (2) ;
le conduit d'aspiration (81) et le conduit d'échappement (83) étant conçus pour rester en état ouvert pendant le fonctionnement du dispositif de chauffage (73) et du ventilateur (71) ;
l'unité d'alimentation en eau (4) étant conçue pour fournir de l'eau dans la cuve (2) à travers la circonférence de la cuve (2) à une position espacée d'une ligne verticale passant par le centre de rotation du tambour (3) d'une distance prédéterminée dans une direction selon la largeur de la cuve (2) ;
le guide d'alimentation en eau (25) étant positionné de façon à permettre à l'eau introduite dans la cuve (2) de se déplacer jusqu'au fond de la cuve (2) le long d'une surface interne circonférentielle de la cuve (2) ; et
le guide d'alimentation en eau (25) formant un piège à eau conçu pour toujours stocker une quantité constante d'eau afin d'empêcher le passage d'air entre la cuve (2) et l'unité d'alimentation en détergent (5).

2. Appareil selon la revendication 1, comprenant en outre un contrôleur conçu pour contrôler l'ouverture et/ou la fermeture de l'unité d'alimentation en eau (4),
le contrôleur étant conçu pour contrôler l'unité d'alimentation en eau (4) afin d'introduire de l'eau dans la cuve (2) pendant le fonctionnement du ventilateur (71) et du dispositif de chauffage (73) et, facultativement,
le contrôleur étant conçu en outre pour contrôler la vitesse de rotation du tambour (3) et introduire de l'eau dans la cuve (2) pendant que le tambour (3) tourne à une vitesse de rotation prédéterminée ou plus.

3. Appareil selon l'une quelconque des revendications précédentes, où le conduit d'aspiration (81) est situé dans une voie d'écoulement par laquelle l'air à l'intérieur de la cuve (2) est dirigé vers le ventilateur (71) de façon que, en cours de fonctionnement, de l'air extérieur de la cuve (2) soit introduit dans le conduit de circulation (7) à travers le conduit d'aspiration (81).

4. Appareil selon l'une quelconque des revendications précédentes, où la surface de section du conduit d'échappement (83) est inférieure à la surface de section du conduit de circulation (7), et/ou où l'appareil est conçu de façon que, en cours de fonctionnement, la quantité d'air évacuée par le conduit d'échappement (83) soit supérieure ou égale à la quantité d'air introduite par le conduit d'aspiration (81).

5. Appareil selon l'une quelconque des revendications précédentes, comprenant en outre une unité de drainage conçue pour évacuer l'eau stockée dans la cuve (2) depuis le tube (2) ;
où le conduit d'échappement (83) est raccordé à l'unité de drainage et, facultativement, où une jonction du conduit d'échappement (83) et de l'unité de drainage et située plus haut que le niveau de consigne maximum d'eau de la cuve (2).

6. Appareil selon la revendication 5, comprenant en outre une valve de commutation conçue pour ouvrir et/ou fermer le conduit d'échappement (83) et, facultativement, comprenant en outre une valve d'écoulement conçue pour empêcher l'air introduit dans l'unité de drainage à travers le conduit d'échappement (83) d'arriver dans la cuve (2).

7. Appareil selon l'une quelconque des revendications précédentes, où la cuve (2), le conduit de circulation (7), le ventilateur (71) et le dispositif de chauffage (73) définissent une première voie d'échange thermique, et
où la cuve (2), le conduit d'aspiration (81), le ventilateur (71), le dispositif de chauffage (73) et le conduit d'échappement (83) définissent une deuxième voie d'échange thermique.

8. Appareil selon l'une quelconque des revendications précédentes, où le guide d'alimentation en eau (25) est situé à la circonférence de la cuve (2) à une position espacée d'une ligne verticale passant par le centre de rotation du tambour (3) d'une distance prédéterminée dans une direction selon la largeur de la cuve (2) ou entre une ligne verticale tangente à la circonférence du tambour (3) et une ligne verticale tangente à la circonférence de la cuve (2).

9. Appareil selon la revendication 8, dans lequel la cuve (2) inclut en outre une partie de communication d'alimentation en eau perforée au niveau de la circonférence de la cuve (2) pour communiquer avec l'unité d'alimentation en eau (4),
où le guide d'alimentation en eau (25) inclut :
un corps de piège (251) du piège à eau hébergé dans la partie de communication d'alimentation en eau et disposé de façon à fournir un espace où l'eau est stockée, la surface circonférentielle externe du corps de piège (251) étant espacée de la surface circonférentielle interne de la partie de communication d'alimentation en eau d'une distance prédéterminée ; et
un tuyau guide (255) fixé à la partie de communication d'alimentation en eau, disposé de façon à guider l'eau dans le corps de piège (251), le tuyau guide (255) définissant une voie d'écoulement pour communication entre un espace entre la surface circonférentielle externe du corps de piège (251) et la surface circonférentielle interne de la partie de communication d'alimentation en eau, et l'intérieur du corps de piège (251).

10. Appareil selon la revendication 9, dans lequel l'espace entre la surface circonférentielle externe du corps de piège (251) et la surface circonférentielle interne de la partie de communication d'alimentation en eau comporte un plan ouvert pour communication entre l'intérieur du corps de piège (251) et l'intérieur de la cuve (2).

11. Appareil selon la revendication 10, dans lequel le plan ouvert prend la forme d'un demi-cercle ou d'un arc situé plus loin de la ligne verticale passant par le centre de rotation du tambour (3) que la ligne passant par le centre de la partie de communication d'alimentation en eau.

12. Appareil selon l'une quelconque des revendications précédentes, où le conduit d'aspiration (81) inclut :
un port d'aspiration disposé pour recevoir de l'extérieur, le port d'aspiration étant fixé au conduit de circulation (7) ; et
un port d'échappement disposé pour alimenter la cuve (2) en air introduit par le port d'aspiration, le port d'échappement étant fixé à la cuve (2) et, facultativement,
le conduit de circulation (7) étant fixé à la surface circonférentielle externe de la cuve (2).

13. Appareil selon la revendication 12, où le conduit d'aspiration (81) comprend en outre une section de couplage fournie avec le port d'évacuation et une section d'extension fournie avec le port d'aspiration, la section d'extension s'étendant verticalement depuis la section de couplage d'une longueur prédéterminée.

14. Appareil selon l'une quelconque des revendications précédentes, où le conduit de circulation (7) inclut en outre un premier filtre disposé pour filtrer l'air introduit par le port d'aspiration et, facultativement, comprenant en outre un deuxième filtre disposé pour filtrer l'air dirigé depuis la cuve (2) vers le conduit de circulation (7) et, encore facultativement,
comprenant en outre un nettoyeur de filtre conçu pour fournir de l'eau de lavage au deuxième filtre afin de le nettoyer.
